# EUROPÄISCHE PATENTSCHRIFT

(11) **EP 2 588 742 B1**
(45) Veröffentlichungstag und Bekanntmachung des Hinweises auf die Patenterteilung: **13.08.2014**
(21) Anmeldenummer: 11728269.9
(22) Anmeldetag: 29.06.2011
(51) Int. Cl.: F02N 11/10, H01R 39/59, H02K 11/00, H02K 23/66

(54) **ELEKTROMOTOR**
ELECTRIC MOTOR
MOTEUR ÉLECTRIQUE

(30) Priorität: 02.07.2010 DE 102010030870
(43) Veröffentlichungstag der Anmeldung: 08.05.2013
(73) Patentinhaber: Robert Bosch GmbH, 70442 Stuttgart (DE)
(72) Erfinder: BAYER, Michael, 71636 Ludwigsburg (DE); SIEGLIN, Sven, 70192 Stuttgart (DE)
(86) Internationale Anmeldenummer: PCT/EP2011/060865
(87) Internationale Veröffentlichungsnummer: WO 2012/001021

(56) Entgegenhaltungen:
- EP-A1- 1 193 838
- GB-A- 197 144

## Beschreibung

Die Erfindung bezieht sich auf einen Elektromotor, insbesondere auf einen elektrischen Startermotor für eine Brennkraftmaschine, nach dem Oberbegriff des Anspruches 1 bzw. 2.

### Stand der Technik

In der DE 199 11 070 A1 wird ein Elektromotor mit einem Kommutator zur Strom-übertragung und -wendung übertragen, der mit einer Thermo-Überlastsicherung zur Vermeidung von Schäden als Folge einer hohen Wärmeentwicklung ausgestattet ist. Über die Thermo-Überlastsicherung kann im Falle des Überschreitens eines Temperatur-Schwellenwerts eine Stromunterbrechung erzeugt werden, indem ein Kurzschluss herbeigeführt wird, welcher zur Unterbrechung des Stromkreises eine Schmelzsicherung durchbrennt.

Um den Kurzschluss zu erzeugen, wird eine Kohlebürste über die Kraft einer Bürstenfeder aus ihrer auf der Mantelfläche des Kollektors aufliegenden Strom-übertragungsposition radial nach außen bis zum Kontakt mit einem Abschaltkontaktelement verschoben. Die Kohlebürste ist in einem aus einem Thermoplast bestehenden Bürstenträger aufgenommen, der bei Überschreiten des Temperatur-Schwellenwerts erweicht, so dass die Bürstenfeder den Bürstenträger einschließlich der darin aufgenommenen Kohlebürste verschieben kann.

Diese Ausführung zeichnet sich durch eine kompakte Bauweise aus, bei der zum Herstellen des Kurzschlusses die Kohlebürste verschoben werden muss. Bei der Verschiebebewegung muss die Stromversorgung der Kohlebürste bestehen blei-ben, damit bei dem Kontakt der Kohlebürste mit dem Abschaltkontaktelement ein Kurzschluss herbeigeführt werden kann.

In der GB 197,144 wird ein Elektromotor mit einer Kommutierungseinrichtung und einer Thermo-Überlastsicherung beschrieben, die ein thermisch verformbares Halteelement und ein federbelastetes Kontaktelement umfasst, wobei mit dem Schmelzen des Halteelements das Kontaktelement durch die Federkraft aus der Außerfunktionsposition in die Kurzschlussposition verstellt wird. Die Thermo-Überlastsicherung ist an einem Bürstenhalter der Kommutierungseinrichtung befestigt.

Die EP 1 193 838 A1 betrifft einen Gleichstrom-Kommutatormotor mit Überlastschutz, der als Bimetallelement ausgeführt ist, welches zwischen einer Außerkontaktposition und einer Kurzschlussposition verstellt wird, sobald ein Temperatur-Schwellenwert erreicht wird.

### Offenbarung der Erfindung

Der Erfindung liegt die Aufgabe zugrunde, mit einfachen konstruktiven Maßnahmen einen Elektromotor mit einer zuverlässigen Thermo-Überlastsicherung auszustatten.

Diese Aufgabe wird erfindungsgemäß mit den Merkmalen des Anspruches 1 bzw. 2 gelöst. Die Unteransprüche geben zweckmäßige Weiterbildungen an.

Die Erfindung bezieht sich auf Elektromotoren mit einem Kommutator zur Strom-übertragung und -wendung sowie mit einer Thermo-Überlastsicherung, welche sicherstellen soll, dass im Falle eines Überschreitens eines Temperatur-Schwellenwerts die Stromzufuhr unterbrochen wird. Der Kommutator umfasst einen mit der Ankerwelle des Elektromotors verbundenen Kollektor sowie Bürsten, welche an der Mantelfläche des Kollektors anliegen und den Strom über den Kollektor auf die Ankerwicklungen übertragen. Die Thermo-Überlastsicherung zum Erzeugen der Stromunterbrechung umfasst ein thermisch verformbares Halteelement sowie des Weiteren ein im oder am Halteelement angeordnetes, elektrisch leitendes Kontaktelement, das zwischen einer Außerfunktionsposition und einer den Stromkreis durch mindestens eine Bürste kurzschließenden Position verstellbar ist. Dieses Kontaktelement ist als ein separat von den Bürsten ausge-führtes Bauteil ausgebildet, das bei der Überführung zwischen Außerfunktions-und Kurzschlussposition relativ zu einer Bürste eine Stellbewegung ausführt. In der Kurzschlussposition liegt das Kontaktelement auf Kontakt zu einer Bürste bzw. einem mit einer Bürste elektrisch verbundenen Bauteil, um den elektrischen Kurzschluss herzustellen, der zur Stromunterbrechung führt, so dass die Temperatur nicht weiter ansteigen kann.

Gegenüber dem Stand der Technik hat diese Ausführung den Vorteil, dass die Bürste sowie die Bürstenfassung bzw. der-träger grundsätzlich zum Erreichen der Kurzschlussposition keine Bewegung ausführen müssen. Für den Kurzschluss muss lediglich das Kontaktelement bewegt werden, nicht jedoch die Bürste bzw. die Bürstenfassung. Dies hat den Vorteil, dass die Bürste zumindest im Wesentlichen gehäusefest gelagert werden kann und lediglich gegebenenfalls zum Kompensieren von Verschleiß um kleine Wegstrecken nachgeführt werden muss, so dass auch die Stromzufuhr zur Bürste keinen oder lediglich minimalen Wegänderungen unterliegt. Es sind keine Probleme bei der Stromzufuhr zur Bürste zu erwarten, so dass auch in der Kurzschlussposition die Stromzufuhr zur Bürste gewährleistet ist, was Voraussetzung für das elektrische Kurzschließen und das Durchbrennen bzw. -schmelzen der Schmelzsicherung im Stromkreis ist. Insgesamt vereinfacht sich die konstruktive Ausführung im Bereich des Kommutators sowie der Thermo-Überlastsicherung.

Das Kontaktelement ist an dem thermisch verformbaren Halteelement angeordnet. Das Halteelement kann Träger des Kontaktelementes sein oder lediglich im Stellweg des Kontaktelementes zwischen Außerfunktions- und Kurzschlussposition angeordnet sein. Das Halteelement reagiert auf eine Temperaturerhöhung und ermöglicht bei Überschreiten eines Temperatur-Schwellenwerts die Überführung des Kontaktelementes in die Kurzschlussposition. Das Halteelement besteht insbesondere aus einem thermoplastischen Kunststoff, welcher sich bei Überschreiten der Schwellentemperatur verformt, wobei in diesem Fall die Verformung Voraussetzung für die Verstellung des Kontaktelementes in die Kurzschlussposition ist. Grundsätzlich kommen aber auch Halteelemente aus sonstigen Materialien in Betracht, welche auf eine Temperaturerhöhung reagieren, beispielsweise Bimetallelemente. In der Ausführung des Halteelementes als Bimetallteil können das Halteelement und das Kontaktelement auch als ein gemeinsames, einteiliges Bauteil ausgeführt sein.

Für den Fall, dass das Halteelement Träger des Kontaktelementes ist, übt zweckmäßigerweise das Halteelement gemeinsam mit dem Kontaktelement die Stellbewegung zwischen der Außerfunktions- und der Kurzschlussposition aus. Befindet sich dagegen das Halteelement im Stellweg des Kontaktelementes, so bewirkt die Temperaturerhöhung, dass das Halteelement sich so weit aus dem Stellweg des Kontaktelementes entfernt, dass das Kontaktelement die Kurzschlussposition erreichen kann. In diesem Fall führen Kontaktelement und Halteelement unterschiedliche Bewegungen aus.

Gemäß einer zweckmäßigen Ausführung ist ein Federelement vorgesehen, welches insbesondere separat von dem Kontaktelement ausgebildet ist und das Kontaktelement in die Kurzschlussposition kraftbeaufschlagt. Möglich ist es aber auch, das Federelement einteilig mit dem Kontaktelement auszubilden, beispielsweise dergestalt, dass ein Abschnitt des Kontaktelementes als Feder ausgeführt ist, die sich am Gehäuse des Elektromotors abstützt.

Der Kurzschluss wird entweder dadurch hergestellt, dass zwei Bürsten, über die der Anker des Elektromotors bestromt wird, mittels des Kontaktelementes elektrisch direkt miteinander verbunden werden, oder dass eine der Bürsten über einen Stromleiter kurzgeschlossen wird. In der letztgenannten Ausführung kann der Stromleiter als Schmelzsicherung dienen, indem der Stromleiter durch den hohen Strom, der beim Kurzschluss entsteht, durchschmilzt.

Das thermisch verformbare Halteelement ist zweckmäßigerweise an einer Position angeordnet, in der das Halteelement einer verhältnismäßig starken Erwärmung im Elektromotor ausgesetzt ist. So kann es zweckmäßig sein, zumindest einen Abschnitt des Halteelements benachbart zur Kollektormantelfläche anzuordnen oder einen Abschnitt des Halteelements benachbart zu einer der Bürsten des Kommutators zu platzieren. Vorzugsweise ist das Halteelement in einer Erweiterung der Bürstenfassung aufgenommen, die auch Träger einer Bürste ist. Möglich ist es aber auch, das Halteelement außerhalb der Bürstenfassung anzuordnen, wobei in die Bürstenfassung eine Ausnehmung angebracht sein kann, über die in der Kurzschlussposition ein Abschnitt des Kontaktelementes auf Kontakt zur Bürste liegt.

Als Stellbewegung für das Kontaktelement zur Überführung zwischen Außerfunktions- und Kurzschlussposition kommen sowohl translatorische als auch rotatorische oder gemischt translatorisch-rotatorische Stellbewegungen in Betracht. Gemäß einer einfachen, zweckmäßigen Ausführung ist vorgesehen, dass das Kontaktelement translatorisch bzw. verschieblich gelagert ist, wobei sowohl eine Verschiebung in Achsrichtung des Elektromotors als auch quer zur Achsrichtung in Betracht kommt.

Weitere Vorteile und zweckmäßige Ausführungen sind den weiteren Ansprüchen, der Figurenbeschreibung und den Zeichnungen zu entnehmen. Es zeigen:
- Fig. 1: eine Startvorrichtung für eine Brennkraftmaschine im Längsschnitt, mit einem elektrischen Startermotor,
- Fig. 2: den Kommutator des Elektromotors einschließlich eines Kontaktelementes zum Herstellen eines Kurzschlusses in einer Ansicht von vorne,
- Fig. 3: den Kommutator in Draufsicht, wobei das elektrische Kontaktelement in der Außerfunktionsposition steht,
- Fig. 4: eine Fig. 3 entsprechende Darstellung des Kommutators, jedoch mit dem Kontaktelement in der Kurzschlussposition, in welcher die beiden Bürsten elektrisch miteinander verbunden sind,
- Fig. 5: eine Darstellung des Kommutators gemäß Schnittlinie V-V aus Fig. 3,
- Fig. 6: eine Darstellung des Kommutators gemäß Schnittlinie VI-VI aus Fig. 4,
- Fig. 7: ein Kommutator in einer weiteren Ausführung der Thermo-Überlastsicherung, bei der das Kontaktelement in einer Erweiterung der Bürstenfassung einer Bürste aufgenommen ist, dargestellt in der Außerfunktionsposition des Kontaktelementes,
- Fig. 8: eine Fig. 7 entsprechende Darstellung, jedoch mit dem Kontaktelement in der Kurzschlussposition,
- Fig. 9: die Bauteile der Thermo-Überlastsicherung des Ausführungsbeispieles gemäß Fig. 7 und 8 in Explosionsdarstellung.

In den Figuren sind gleiche Bauteile mit gleichen Bezugszeichen versehen.

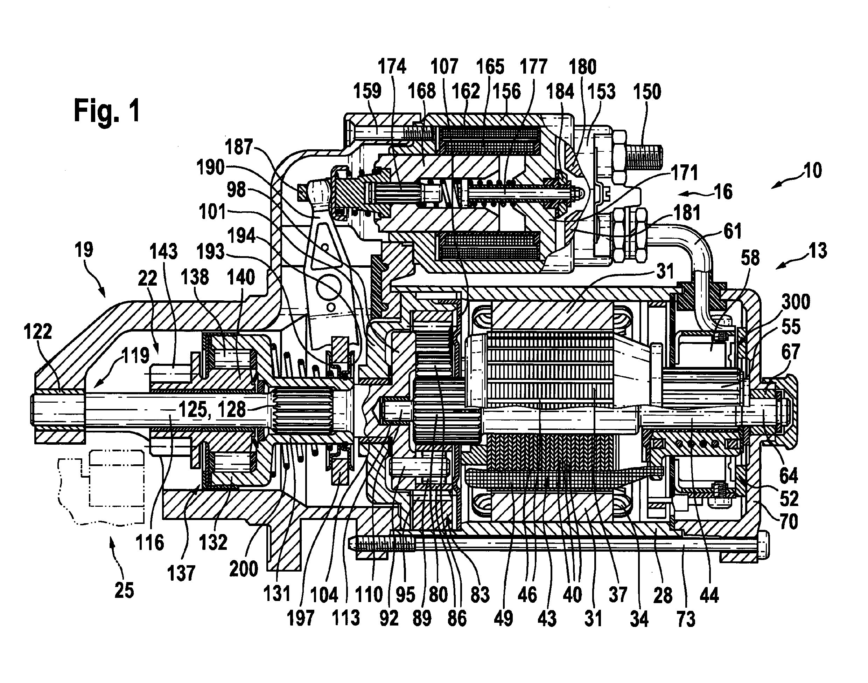

Figur 1 zeigt eine Startvorrichtung in einem Längsschnitt. In der Figur 1 ist eine Startvorrichtung 10 dargestellt. Diese Startvorrichtung 10 weist beispielsweise einen Startermotor 13 und ein Einrückrelais 16 auf. Der Startermotor 13 und das Einrückrelais 16 sind an einem gemeinsamen Antriebslagerschild 19 befestigt. Der Startermotor 13 dient funktionell dazu, ein Andrehritzel 22 anzutreiben, wenn es im Zahnkranz 25 der hier nicht dargestellten Brennkraftmaschine eingespurt ist.

Der Startermotor 13 weist als Gehäuse ein Polrohr 28 auf, das an seinem Innenumfang Polschuhe 31 trägt, die jeweils von einer Erregerwicklung 34 umwickelt sind. Die Polschuhe 31 umgeben wiederum einen Anker 37, der ein aus Lamellen 40 aufgebautes Ankerpaket 43 und eine in Nuten 46 angeordnete Ankerwicklung 49 aufweist. Das Ankerpaket 43 ist auf eine Antriebswelle 44 aufgepresst. An dem Andrehritzel 22 abgewandten Ende der Antriebswelle 44 ist des weiteren ein Kommutator 52 angebracht, der u.a. aus einzelnen Kommutatorlamellen 55 aufgebaut ist. Die Kommutatorlamellen 55 sind in bekannter Weise mit der Ankerwicklung 49 derartig elektrisch verbunden, dass sich bei Bestromung der Kommutatorlamellen 55 durch Kohlebürsten 58 eine Drehbewegung des Ankers 37 im Polrohr 28 ergibt. Eine zwischen dem Einspurrelais 16 und dem Startermotor 13 angeordnete Stromzuführung 61 versorgt im Einschaltzustand sowohl die Kohlebürsten 58 als auch die Erregerwicklung 34 mit Strom. Die Antriebswelle 44 ist kommutatorseitig mit einem Wellenzapfen 64 in einem Gleitlager 67 abgestützt, welches wiederum in einem Kommutatorlagerdeckel 70 ortsfest gehalten ist. Der Kommutatordeckel 70 wiederum wird mittels Zuganker 73, die über den Umfang des Polrohrs 28 verteilt angeordnet sind (Schrauben, beispielsweise 2, 3 oder 4 Stück) im Antriebslagerschild 19 befestigt. Es stützt sich dabei das Polrohr 28 am Antriebslagerschild 19 ab, und der Kommutatorlagerdeckel 70 am Polrohr 28.

In Antriebsrichtung schließt sich an den Anker 37 ein sogenanntes Sonnenrad 80 an, das Teil eines Planetengetriebes 83 ist. Das Sonnenrad 80 ist von mehreren Planetenrädern 86 umgeben, üblicherweise drei Planetenräder 86, die mittels Wälzlager 89 auf Achszapfen 92 abgestützt sind. Die Planetenräder 86 wälzen in einem Hohlrad 95 ab, das im Polrohr 28 außenseitig gelagert ist. In Richtung zur Abtriebsseite schließt sich an die Planetenräder 86 ein Planetenträger 98 an, in dem die Achszapfen 92 aufgenommen sind. Der Planetenträger 98 wird wiederum in einem Zwischenlager 101 und einem darin angeordneten Gleitlager 104 gelagert. Das Zwischenlager 101 ist derartig topfförmig gestaltet, dass in diesem sowohl der Planetenträger 98, als auch die Planetenräder 86 aufgenommen sind. Desweiteren ist im topfförmigen Zwischenlager 101 das Hohlrad 95 angeordnet, das letztlich durch einen Deckel 107 gegenüber dem Anker 37 geschlossen ist. Auch das Zwischenlager 101 stützt sich mit seinem Außenumfang an der Innenseite des Polrohrs 28 ab. Der Anker 37 weist auf dem vom Kommutator 52 abgewandten Ende der Antriebswelle 44 einen weiteren Wellenzapfen 110 auf, der ebenfalls in einem Gleitlager 113 aufgenommen ist, ab. Das Gleitlager 113 wiederum ist in einer zentralen Bohrung des Planetenträgers 98 aufgenommen. Der Planetenträger 98 ist einstückig mit der Abtriebswelle 116 verbunden. Diese Abtriebswelle 116 ist mit ihrem vom Zwischenlager 101 abgewandten Ende 119 in einem weiteren Lager 122, welches im Antriebslagerschild 19 befestigt ist, abgestützt. Die Abtriebswelle 116 ist in verschiedene Abschnitte aufgeteilt: So folgt dem Abschnitt, der im Gleitlager 104 des Zwischenlagers 101 angeordnet ist, ein Abschnitt mit einer sogenannten Geradverzahnung 125 (Innenverzahnung), die Teil einer sogenannten Wellen-Nabe-Verbindung ist. Diese Welle-Nabe-Verbindung 128 ermöglicht in diesem Fall das axial geradlinige Gleiten eines Mitnehmers 131. Dieser Mitnehmer 131 ist ein hülsenartiger Fortsatz, der einstückig mit einem topfförmigen Außenring 132 des Freilaufs 137 ist. Dieser Freilauf 137 (Richtgesperre) besteht des Weiteren aus dem Innenring 140, der radial innerhalb des Außenrings 132 angeordnet ist. Zwischen dem Innenring 140 und dem Außenring 132 sind Klemmkörper 138 angeordnet. Diese Klemmkörper 138 verhindern in Zusammenwirkung mit dem Innen- und dem Außenring eine Relativdrehung zwischen dem Außenring und dem Innenring in einer zweiten Richtung. Mit anderen Worten: Der Freilauf 137 ermöglicht eine Relativbewegung zwischen Innenring 140 und Außenring 132 nur in eine Richtung. In diesem Ausführungsbeispiel ist der Innenring 140 einstückig mit dem Andrehritzel 22 und dessen Schrägverzahnung 143 (Außenschrägverzahnung) ausgeführt.

Der Vollständigkeit halber sei hier noch auf den Einspurmechanismus eingegangen. Das Eindrückrelais 16 weist einen Bolzen 150 auf, der ein elektrischer Kontakt ist und der an den Pluspol einer elektrischen Starterbatterie, die hier nicht dargestellt ist, angeschlossen ist. Dieser Bolzen 150 ist durch einen Relaisdeckel 153 hindurchgeführt. Dieser Relaisdeckel 153 schließt ein Relaisgehäuse 156 ab, das mittels mehrerer Befestigungselemente 159 (Schrauben) am Antriebslagerschild 19 befestigt ist. Im Einrückrelais 16 ist weiterhin eine Einzugswicklung 162 und eine sogenannte Haltewicklung 165 angeordnet. Die Einzugswicklung 162 und die Haltewicklung 165 bewirken beide jeweils im eingeschalteten Zustand ein elektromagnetisches Feld, welches sowohl das Relaisgehäuse 156 (aus elektromagnetisch leitfähigem Material), einen linear beweglichen Anker 168 und einen Ankerrückschluss 171 durchströmt. Der Anker 168 trägt eine Schubstange 174, die beim linearen Einzug des Ankers 168 in Richtung zu einem Schaltbolzen 177 bewegt wird. Mit dieser Bewegung der Schubstange 174 zum Schaltbolzen 177 wird dieser aus seiner Ruhelage in Richtung zu zwei Kontakten 180 und 181 bewegt, so dass eine am zu den Kontakten 180 und 181 Ende des Schaltbolzens 177 angebrachte Kontaktbrücke 184 beide Kontakte 180 und 181 elektrisch miteinander verbindet. Dadurch wird vom Bolzen 150 elektrische Leistung über die Kontaktbrücke 184 hinweg zur Stromzuführung 61 und damit zu den Kohlebürsten 58 geführt. Der Startermotor 13 wird dabei bestromt.

Das Einrückrelais 16 bzw. der Anker 168 hat aber darüber hinaus auch die Aufgabe, mit einem Zugelement 187 einen dem Antriebslagerschild 19 drehbeweglich angeordneten Hebel zu bewegen. Dieser Hebel 190, üblicherweise als Gabelhebel ausgeführt, umgreift mit zwei hier nicht dargestellten "Zinken" an ihrem Außenumfang zwei Scheiben 193 und 194, um einen zwischen diesen eingeklemmten Mitnehmerring 197 zum Freilauf 137 hin gegen den Widerstand der Feder 200 zu bewegen und dadurch das Andrehritzel 22 in dem Zahnkranz 25 einzuspuren.

Wie Fig. 1 weiter zu entnehmen, ist im Bereich des Kommutators 52 eine Thermo-Überlastsicherung 300 angeordnet, die die Funktion hat, im Falle des Überschreitens eines Temperatur-Schwellenwertes eine Stromunterbrechung herbeizuführen. Die Temperatur-Überlastsicherung 300, die in den nachfolgenden Figuren im Detail dargestellt ist, umfasst ein im Gehäuse des Elektromotors verschieblich angeordnetes Kontaktelement, welches zwischen einer Außerfunktionsposition und einer Kurzschlussposition verstellbar ist, in der das Kontaktelement die Bürsten 58 direkt miteinander verbindet, um einen Kurzschluss herzustellen, wobei der beim Kurzschluss entstehende hohe Stromfluss zu einem Durchschmelzen eines Schmelzsicherungselementes im Stromkreis führt, so dass der Stromkreis unterbrochen wird.

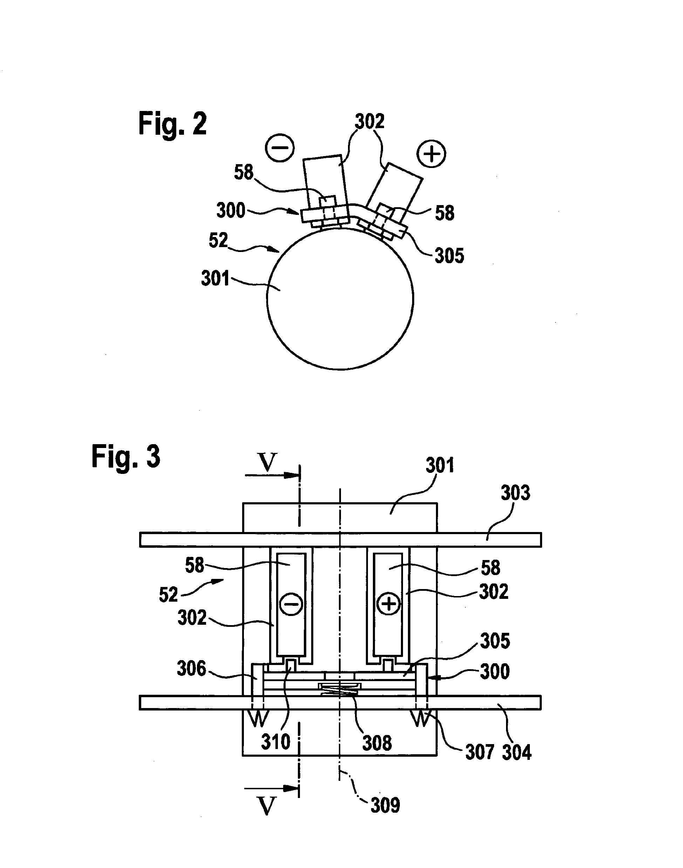

In den Fig. 2 bis 6 ist ein erstes Ausführungsbeispiel eines Kommutators 52 mit einer Thermo-Überlastsicherung 300 dargestellt. Die Thermo-Überlastsicherung 300 umfasst ein elektrisches Kontaktelement 305, das eine Ankerbrücke bildet und in einem Halteelement 306 aus einem thermoplastischen Material aufgenommen ist. Das Kontaktelement 305 befindet sich an einer axialen Stirnseite der beiden nebeneinander liegenden Kohlebürsten 52 und kann in Kurzschlussposition in eine die beiden Kohlebürsten 58 direkt verbindende Position verstellt werden. Das Kontaktelement 305 ist fest in dem Halteelement 306 aus thermoplastischem Material aufgenommen, das mit Steckstiften 307 versehen ist, welche in Ausnehmungen in einer Stromschiene 304 eingesteckt sind. Die Stromschiene 304 bildet ein Strom führendes Bauteil, mit dem eine der Kohlebürsten 58 elektrisch verbunden ist. Parallel zur Stromschiene 304 verläuft eine Bürstenplatte 303, welche elektrisch auf Masse geschaltet ist und an der die elektrisch isolierenden Bürstenfassungen 302 zur Aufnahme der Kohlebürsten 58 gehalten sind. Eine der Bürsten 58 ist elektrisch mit der Bürstenplatte 303 verbunden, die zweite Bürste 58 mit der Stromschiene 304.

Das Halteelement 306, welches Bestandteil der Thermo-Überlastsicherung 300 ist, wird von einem Federelement 308 in Richtung auf die Kohlebürsten 58 kraftbeaufschlagt. Das Federelement 308 ist als Druckfeder ausgeführt, welche sich an der Stromschiene 304 abstützt, wobei die Kraftrichtung parallel zur Längsachse 309 des Elektromotors liegt. Die Befestigung des Halteelementes 306 über die Steckstifte 307 in Ausnehmungen in der Stromschiene 304 erfolgt in der Weise, dass eine axiale Verschiebbarkeit des Halteelementes 306 einschließlich des darin aufgenommenen elektrischen Kontaktelementes 305 in Richtung der Längsachse 309 des Motors möglich ist.

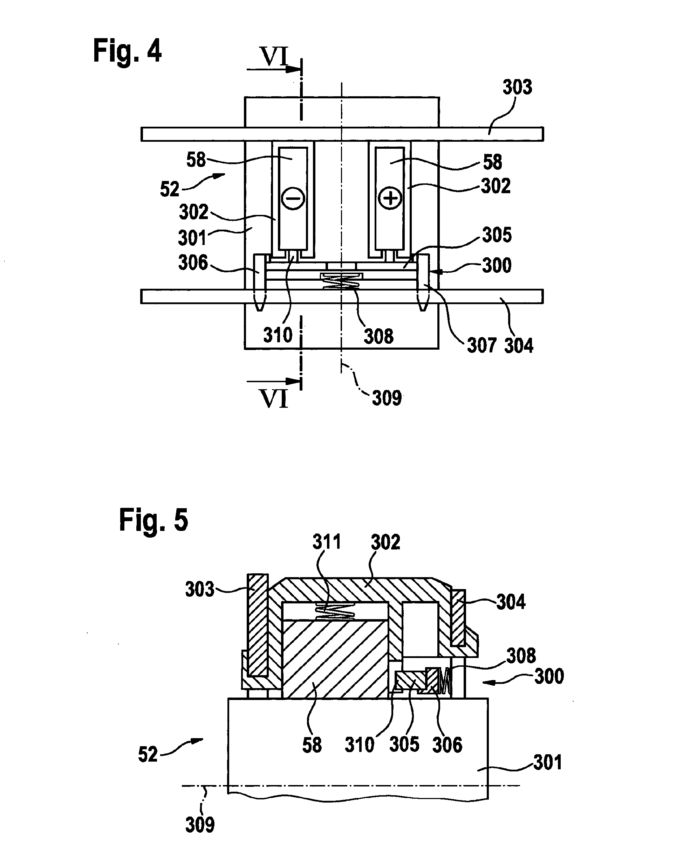

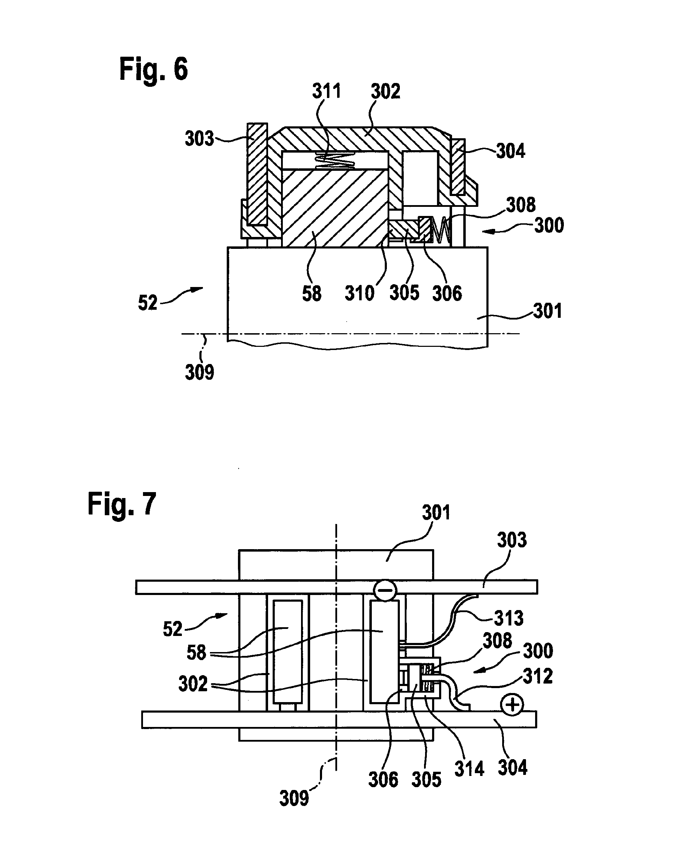

In den Fig. 3 und 5 ist die Thermo-Überlastsicherung 300 in der Außerfunktionsposition dargestellt, in der das Kontaktelement 305 auf Abstand zu den Kohlebürsten 58 liegt, so dass keine direkte elektrische Verbindung zwischen den beiden Kohlebürsten 58 über das Kontaktelement 305 besteht. In den Fig. 4 und 6 ist dagegen die thermische Überlastsicherung 300 in der Kurzschlussposition dargestellt, in der das Kontaktelement 305 auf Kontakt zu beiden Kohlebürsten 58 liegt, so dass ein unmittelbarer elektrischer Kontakt zwischen den Kohlebürsten besteht. Der hierbei entstehende hohe Stromfluss führt zu einem Durchschmelzen eines Schmelzsicherungselementes und damit zu einer Unterbrechung des Stromkreises.

In der Außerfunktionsposition ist das Halteelement 306 mit seinen Steckstiften 307 an der Stromschiene 304 gegen die Kraft des Federelementes 308 gehalten. Übersteigt die Temperatur einen Schwellenwert, so erweicht das Material des Halteelements 306 im Bereich der Steckstifte 307, woraufhin die Steckstifte 307 die haltende Funktion nicht länger aufrecht erhalten können und das Halteelement 306 einschließlich des darin aufgenommenen Kontaktelementes 305 durch die Kraft des Federelementes 308 axial in die Kontakt- bzw. Kurzschlussposition verstellt wird.

Der Kontakt zu den Kohlebürsten 58 wird über Vorsprünge 310 hergestellt, welche einteilig mit dem Kontaktelement 305 ausgebildet sind und in Richtung der Kohlebürsten 58 weisen. Die Bürstenfassungen 302 sind an ihrer dem Kontaktelement 305 zugewandten Stirnseite mit einer Ausnehmung versehen, durch die der Vorsprung 310 in der Kontakt- bzw. Kurzschlussposition zur Kontaktierung der Kohlebürsten 58 hindurchragt.

Wie den Schnittdarstellungen gemäß den Fig. 5 und 6 zu entnehmen, sind die Kohlebürsten 58 in ihren jeweiligen Bürstenfassungen 302 über eine Nachstellfeder 311 abgestützt, die für eine permanente Kraftbeaufschlagung der Kohlebürsten 58 in Richtung auf die Mantelfläche des Kollektors 301 und damit für einen permanenten Kontakt auch bei verschleißbedingtem Abrieb der Kohlebürsten sorgt. Die Wirkrichtung der Nachstellfeder 311 liegt orthogonal zur Wirkrichtung des Federelements 308.

In den Fig. 7 bis 9 ist ein weiteres Ausführungsbeispiel eines Kommutators 52 mit einer Thermo-Überlastsicherung 300 dargestellt. Die Thermo-Überlastsicherung 300 umfasst das stempelförmige Kontaktelement 305, das einen Isolierdeckel bildende thermoplastische Halteelement 306 sowie das als Druckfeder ausgeführte Federelement 308, wobei die Bauteile 305, 306 und 308 in einer Erweiterung 314 der Bürstenfassung 302 einer der Kohlebürsten 58 aufgenommen sind. Die Erweiterung 314 befindet sich an einer Umfangsseite der Bürstenfassung 302 auf der der benachbarten Kohlebürste abgewandten Seite. Innerhalb der Erweiterung 314 kann das Kontaktelement 305 in Umfangsrichtung bzw. quer zur Längsachse 309 verstellt werden. Das Kontaktelement 305 ist in der Erweiterung 314 von dem Federelement 308 in Richtung auf die Kohlebürste 58 kraftbeaufschlagt.

Das stempelförmige Kontaktelement 305 ist über eine Litze 312 elektrisch mit der Stromschiene 304 verbunden. Die Kohlebürste 58, der die ThermoÜberlastsicherung 300 zugeordnet ist, ist über eine weitere Litze 313 mit der auf Masse liegenden Bürstenplatte 303 verbunden.

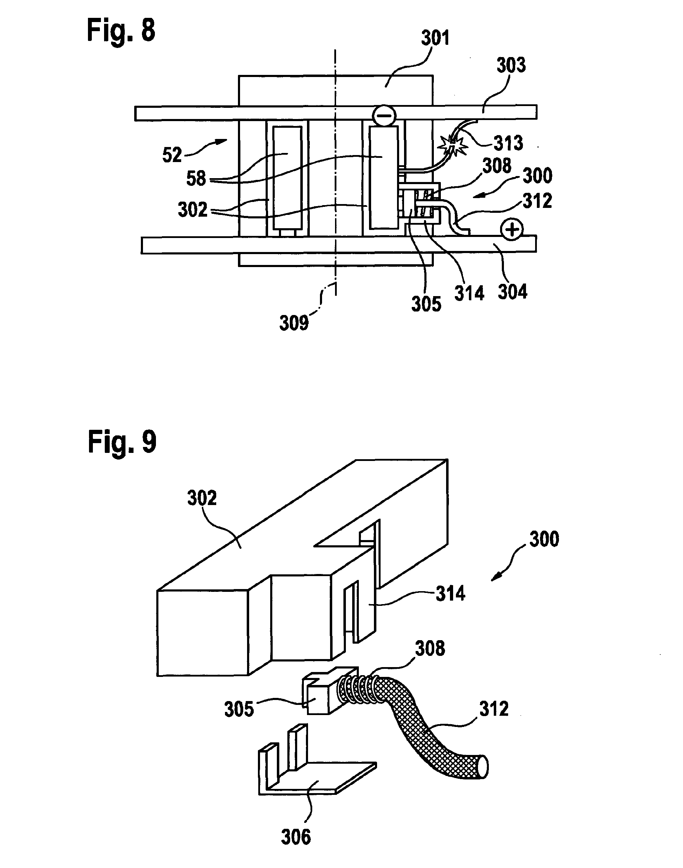

In der Außerfunktionsposition gemäß Fig. 7 liegt das stempelförmige Kontaktelement 305 auf Abstand zur Kohlebürste 58, so dass kein Kurzschluss gegeben ist. Das Kontaktelement 305 wird von dem Halteelement 306 auf Abstand zur Kohlebürste gehalten, wobei das Halteelement 306, wie Fig. 9 zu entnehmen, einen Isolierdeckel bildet, welcher gehäusefest in der Erweiterung 314 aufgenommen ist. Das Halteelement 306 weist zwei abragende Abschnitte auf, zwischen denen eine Ausnehmung frei liegt, durch die ein Vorsprung am stempelförmigen Kontaktelement 305 hindurchragt. Die abragenden Abschnitte am Halteelement 306 halten im Normalfall, also bei Temperaturverhältnissen unterhalb des Schwellenwertes, das Kontaktelement 305 auf Abstand zur Kohlebürste 58. Sobald der Temperatur-Schwellenwert überschritten wird, schmelzen die abragenden Abschnitte am Halteelement 306, woraufhin das Kontaktelement 305 durch die Kraft des Federelementes 308 auf Kontakt mit der Kohlebürste 58 verschoben und ein Kurzschluss zwischen den Schienen 303 und 304 über die erste Litze 312, das Kontaktelement 305, die Kohlebürste 58 und die zweite Litze 313 herbeigeführt wird.

Die zweite Litze 313 weist einen kleineren Litzendurchmesser als die erste Litze 313 auf, welche mit dem Kontaktelement 305 verbunden ist. Die zweite Litze 313 kleineren Durchmessers stellt das Schmelzsicherungselement dar, das bei entsprechend hoher Bestromung im Kurzschlussfall durchschmilzt, so wie dies in Fig. 8 symbolisch dargestellt ist.

## Patentansprüche

1. Elektromotor, insbesondere elektrischer Startermotor (13) für eine Brennkraftmaschine, mit einem Kommutator (52), mit einem mit der Ankerwelle (44) des Elektromotors verbundenen Kollektor (301) und an der Mantelfläche des Kollektors (301) anliegenden Bürsten (58), mit einer Thermo-Überlastsicherung (300) zum Herbeiführen einer Stromunterbrechung im Falle eines Überschreitens eines Temperatur-Schwellenwerts, wobei die Thermo-Überlastsicherung (300) ein thermisch verformbares Halteelement (306) sowie ein am Halteelement (306) gehaltenes, elektrisch leitendes Kontaktelement (305) umfasst, das zwischen einer Außerfunktionsposition und einer den Stromkreis durch mindestens eine Bürste (58) kurzschließenden Kurzschlussposition verstellbar ist, wobei das Kontaktelement (305) ein separat von den Bürsten (58) ausgeführtes Bauteil bildet, das gegenüber mindestens einer Bürste (58) zwischen der Außerfunktions- und der Kurzschlussposition verstellbar ist, wobei in der Kurzschlussposition das Kontaktelement (305) auf Kontakt zu einer Bürste (58) bzw. einem mit einer Bürste (58) elektrisch verbundenen Bauteil liegt, wobei das Kontaktelement (305) von einem als separates Bauteil ausgeführten Federelement (308) in die Kurzschlussposition kraftbeaufschlagt ist, **dadurch gekennzeichnet, dass** das Kontaktelement (305) an dem thermisch verformbaren Halteelement (306) angeordnet ist, das Träger des Kontaktelementes (305) ist, und dass das Halteelement (306) gemeinsam mit dem Kontaktelement (305) die Stellbewegung zwischen der Außerfunktions- und der Kurzschlussposition ausübt.

2. Elektromotor, insbesondere elektrischer Startermotor (13) für eine Brennkraftmaschine, mit einem Kommutator (52), mit einem mit der Ankerwelle (44) des Elektromotors verbundenen Kollektor (301) und an der Mantelfläche des Kollektors (301) anliegenden Bürsten (58), mit einer Thermo-Überlastsicherung (300) zum Herbeiführen einer Stromunterbrechung im Falle eines Überschreitens eines Temperatur-Schwellenwerts, wobei die Thermo-Überlastsicherung (300) ein thermisch verformbares Halteelement (306) sowie ein am Halteelement (306) gehaltenes, elektrisch leitendes Kontaktelement (305) umfasst, das zwischen einer Außerfunktionsposition und einer den Stromkreis durch mindestens eine Bürste (58) kurzschließenden Kurzschlussposition verstellbar ist, wobei das Halteelement (306) auf eine Temperaturerhöhung reagiert und bei Überschreiten eines Temperatur-Schwellenwerts die Überführung des Kontaktelementes (305) in die Kurzschlussposition ermöglicht, wobei das Kontaktelement (305) ein separat von den Bürsten (58) ausgeführtes Bauteil bildet, das gegenüber mindestens einer Bürste (58) zwischen der Außerfunktions- und der Kurzschlussposition verstellbar ist, wobei in der Kurzschlussposition das Kontaktelement (305) auf Kontakt zu einer Bürste (58) bzw. einem mit einer Bürste (58) elektrisch verbundenen Bauteil liegt, wobei das Kontaktelement (305) von einem als separates Bauteil ausgeführten Federelement (308) in die Kurzschlussposition kraftbeaufschlagt ist, **dadurch gekennzeichnet, dass** das Kontaktelement (305) an dem thermisch verformbaren Halteelement (306) angeordnet ist, wobei sich das Halteelement (306) im Stellweg des Kontaktelementes (305) befindet und bei einer Temperaturerhöhung das Halteelement (306) sich so weit aus dem Stellweg des Kontaktelementes (305) entfernt, dass das Kontaktelement (305) die Kurzschlussposition erreichen kann, wobei das Kontaktelement (305) und das Halteelement (306) unterschiedliche Bewegungen ausführen.

3. Elektromotor nach Anspruch 1 oder 2, **dadurch gekennzeichnet, dass** das Halteelement (306) aus einem thermoplastischen Kunststoff besteht.

4. Elektromotor nach einem der Ansprüche 1 bis 3, **dadurch gekennzeichnet, dass** das Kontaktelement (305) in der Kurzschlussposition zwei Bürsten (58) elektrisch miteinander verbindet.

5. Elektromotor nach einem der Ansprüche 1 bis 4, **dadurch gekennzeichnet, dass** das Kontaktelement (305) in der Kurzschlussposition eine Bürste (58) mit einem Stromleiter (312) elektrisch verbindet.

6. Elektromotor nach einem der Ansprüche 1 bis 5, **dadurch gekennzeichnet, dass** zumindest ein Abschnitt des Halteelements (306) benachbart zur Kollektormantelfläche angeordnet ist.

7. Elektromotor nach einem der Ansprüche 1 bis 6, **dadurch gekennzeichnet, dass** zumindest ein Abschnitt des Halteelements (306) benachbart zu einer Bürste (58) angeordnet ist.

8. Elektromotor nach Anspruch 7, **dadurch gekennzeichnet, dass** das Halteelement (306) in einer Erweiterung (314) einer Bürstenfassung (302) zur Aufnahme einer Bürste (58) aufgenommen ist.

9. Elektromotor nach einem der Ansprüche 1 bis 8, **dadurch gekennzeichnet, dass** das Kontaktelement (305) verschiebbar gelagert ist.

10. Elektromotor nach Anspruch 9, **dadurch gekennzeichnet, dass** das Kontaktelement (305) in Achsrichtung des Elektromotors (13) verschiebbar gelagert ist.

11. Elektromotor nach Anspruch 9, **dadurch gekennzeichnet, dass** das Kontakt-element (305) quer zur Achsrichtung des Elektromotors (13) bzw. in Umfangsrichtung verschiebbar gelagert ist.

## Claims

1. Electric motor, in particular an electric starter motor (13) for an internal combustion engine, having a commutator (52) having a collector (301), which is connected to the armature shaft (44) of the electric motor, and brushes (58) which bear on the lateral surface of the collector (301), having thermal overload protection means (300) for causing an interruption in power in the event of a temperature threshold value being exceeded, wherein the thermal overload protection means (300) comprises a thermally deformable holding element (306) and also an electrically conductive contact element (305) which is held on the holding element (306) and can be adjusted between an inoperative position and a short-circuiting position which shorts the electrical circuit by at least one brush (58), wherein the contact element (305) forms a component which is designed separately from the brushes (58) and can be adjusted between the inoperative position and the short-circuiting position in relation to at least one brush (58), wherein, in the short-circuiting position, the contact element (305) is in contact with a brush (58) or a component which is electrically connected to a brush (58), wherein force is applied to the contact element (305) by a spring element (308), which is designed as a separate component, in the short-circuiting position, **characterized in that** the contact element (305) is arranged on the thermally deformable holding element (306) which is the carrier of the contact element (305), and **in that** the holding element (306), together with the contact element (305), executes the actuating movement between the inoperative position and the short-circuiting position.

2. Electric motor, in particular an electric starter motor (13) for an internal combustion engine, having a commutator (52) having a collector (301), which is connected to the armature shaft (44) of the electric motor, and brushes (58) which bear on the lateral surface of the collector (301), having thermal overload protection means (300) for causing an interruption in power in the event of a temperature threshold value being exceeded, wherein the thermal overload protection means (300) comprises a thermally deformable holding element (306) and also an electrically conductive contact element (305) which is held on the holding element (306) and can be adjusted between an inoperative position and a short-circuiting position which shorts the electrical circuit by at least one brush (58), wherein the holding element (306) reacts to an increase in temperature and, when a temperature threshold value is exceeded, allows the contact element (305) to be moved to the short-circuiting position, wherein the contact element (305) forms a component which is designed separately from the brushes (58) and can be adjusted between the inoperative position and the short-circuiting position in relation to at least one brush (58), wherein, in the short-circuiting position, the contact element (305) is in contact with a brush (58) or a component which is electrically connected to a brush (58), wherein force is applied to the contact element (305) by a spring element (308), which is designed as a separate component, in the short-circuiting position, **characterized in that** the contact element (305) is arranged on the thermally deformable holding element (306), wherein the holding element (306) is located in the actuating path of the contact element (305) and, in the event of an increase in temperature, the holding element (306) distances itself from the actuating path of the contact element (305) to such an extent that the contact element (305) can reach the short-circuiting position, wherein the contact element (305) and the holding element (306) perform different movements.

3. Electric motor according to Claim 1 or 2, **characterized in that** the holding element (306) is composed of a thermoplastic material.

4. Electric motor according to one of Claims 1 to 3, **characterized in that** the contact element (305) electrically connects two brushes (58) to one another in the short-circuiting position.

5. Electric motor according to one of Claims 1 to 4, **characterized in that** the contact element (305) electrically connects a brush (58) to an electrical conductor (312) in the short-circuiting position.

6. Electric motor according to one of Claims 1 to 5, **characterized in that** at least a portion of the holding element (306) is arranged adjacent to the collector lateral surface.

7. Electric motor according to one of Claims 1 to 6, **characterized in that** at least a portion of the holding element (306) is arranged adjacent to a brush (58).

8. Electric motor according to Claim 7, **characterized in that** the holding element (306) is accommodated in an extension (314) of a brush holder (302) for the purpose of accommodating a brush (58).

9. Electric motor according to one of Claims 1 to 8, **characterized in that** the contact element (305) is mounted such that it can be displaced.

10. Electric motor according to Claim 9, **characterized in that** the contact element (305) is mounted such that it can be displaced in the axial direction of the electric motor (13).

11. Electric motor according to Claim 9, **characterized in that** the contact element (305) is mounted such that it can be displaced transverse to the axial direction of the electric motor (13) or in the circumferential direction.

## Revendications

1. Moteur électrique, en particulier démarreur électrique (13) pour un moteur à combustion interne, comprenant un commutateur (52), un collecteur (301) connecté à l'arbre d'induit (44) du moteur électrique et des balais (58) s'appliquant à la surface d'enveloppe du collecteur (301), avec une protection contre les surcharges thermiques (300) afin de provoquer une interruption de l'alimentation électrique dans le cas d'un dépassement d'une valeur seuil de température, la protection contre les surcharges thermiques (300) comprenant un élément de fixation déformable thermiquement (306) ainsi qu'un élément de contact électriquement conducteur (305) fixé à l'élément de fixation (306), qui peut être réglé entre une position non fonctionnelle et une position de court-circuit court-circuitant le circuit d'alimentation électrique par au moins un balai (58), l'élément de contact (305) formant un composant réalisé de manière séparée des balais (58), lequel peut être réglé par rapport à au moins un balai (58) entre la position non fonctionnelle et la position de court-circuit, dans la position de court-circuit, l'élément de contact (305) étant en contact avec un balai (58) ou avec un composant connecté électriquement à un balai (58), l'élément de contact (305) étant sollicité avec une force dans la position de court-circuit par un élément de ressort (308) réalisé en tant que composant séparé, **caractérisé en ce que** l'élément de contact (305) est disposé sur l'élément de fixation déformable thermiquement (306), qui est le support de l'élément de contact (305), et **en ce que** l'élément de fixation (306) effectue, conjointement avec l'élément de contact (305), le mouvement de réglage entre la position non fonctionnelle et la position de court-circuit.

2. Moteur électrique, en particulier démarreur électrique (13) pour un moteur à combustion interne, comprenant un commutateur (52), un collecteur (301) connecté à l'arbre d'induit (44) du moteur électrique et des balais (58) s'appliquant à la surface d'enveloppe du collecteur (301), avec une protection contre les surcharges thermiques (300) afin de provoquer une interruption de l'alimentation électrique dans le cas d'un dépassement d'une valeur seuil de température, la protection contre les surcharges thermiques (300) comprenant un élément de fixation déformable thermiquement (306) ainsi qu'un élément de contact électriquement conducteur (305) fixé à l'élément de fixation (306), qui peut être réglé entre une position non fonctionnelle et une position de court-circuit court-circuitant le circuit d'alimentation électrique par au moins un balai (58), l'élément de fixation (306) réagissant à une augmentation de température, et en cas de dépassement d'une valeur seuil de température, permettant le transfert de l'élément de contact (305) dans la position de court-circuit, l'élément de contact (305) formant un composant réalisé de manière séparée des balais (58), lequel peut être réglé par rapport à au moins un balai (58) entre la position non fonctionnelle et la position de court-circuit, dans la position de court-circuit, l'élément de contact (305) étant en contact avec un balai (58) ou avec un composant connecté électriquement à un balai (58), l'élément de contact (305) étant sollicité avec une force dans la position de court-circuit par un élément de ressort (308) réalisé en tant que composant séparé, **caractérisé en ce que** l'élément de contact (305) est disposé sur l'élément de fixation déformable thermiquement (306), l'élément de fixation (306) se trouvant dans la trajectoire de réglage de l'élément de contact (305), et dans le cas d'une augmentation de température, l'élément de fixation (306) s'éloignant hors de la trajectoire de réglage de l'élément de contact (305) dans une telle mesure que l'élément de contact (305) puisse atteindre la position de court-circuit, l'élément de contact (305) et l'élément de fixation (306) effectuant des mouvements différents.

3. Moteur électrique selon la revendication 1 ou 2, **caractérisé en ce que** l'élément de fixation (306) se compose d'un plastique thermoplastique.

4. Moteur électrique selon l'une quelconque des revendications 1 à 3, **caractérisé en ce que** l'élément de contact (305), dans la position de court-circuit, relie électriquement l'un à l'autre deux balais (58).

5. Moteur électrique selon l'une quelconque des revendications 1 à 4, **caractérisé en ce que** l'élément de contact (305), dans la position de court-circuit, relie électriquement un balai (58) à un conducteur électrique (312).

6. Moteur électrique selon l'une quelconque des revendications 1 à 5, **caractérisé en ce qu'**au moins une portion de l'élément de fixation (306) est disposée à proximité de la surface d'enveloppe du collecteur.

7. Moteur électrique selon l'une quelconque des revendications 1 à 6, **caractérisé en ce qu'**au moins une portion de l'élément de fixation (306) est disposée à proximité d'un balai (58).

8. Moteur électrique selon la revendication 7, **caractérisé en ce que** l'élément de fixation (306) est reçu dans un élargissement (314) d'une monture de balai (302) pour recevoir un balai (58).

9. Moteur électrique selon l'une quelconque des revendications 1 à 8, **caractérisé en ce que** l'élément de contact (305) est monté de manière déplaçable.

10. Moteur électrique selon la revendication 9, **caractérisé en ce que** l'élément de contact (305) est monté de manière déplaçable dans la direction axiale du moteur électrique (13).

11. Moteur électrique selon la revendication 9, **caractérisé en ce que** l'élément de contact (305) est monté de manière déplaçable transversalement à la direction axiale du moteur électrique (13) ou de manière déplaçable dans la direction périphérique.
